# EUROPÄISCHE PATENTSCHRIFT

(11) **EP 1 517 059 B1**
(45) Veröffentlichungstag und Bekanntmachung des Hinweises auf die Patenterteilung: **17.05.2006**
(21) Anmeldenummer: 04018544.9
(22) Anmeldetag: 03.08.2004
(51) Int. Cl.: F16D 21/06, F16D 25/12, F16D 48/06, F16D 3/12, F16D 48/04

(54) **Doppelkupplungsgetriebe mit Zustandshaltefunktion**
Double clutch gearing with position holding function
Engrenage à double embrayage avec fonction de maintien de position

(30) Priorität: 21.08.2003 DE 10338355
(43) Veröffentlichungstag der Anmeldung: 23.03.2005
(73) Patentinhaber: Bayerische Motoren Werke Aktiengesellschaft, 80788 München (DE)
(72) Erfinder: Neuner, Josef, 83064 Raubling (DE)

(56) Entgegenhaltungen:
- DE-A- 10 043 060
- DE-A- 10 134 121
- DE-A- 19 950 679
- US-A- 4 632 234

## Beschreibung

Die vorliegende Erfindung betrifft ein Doppelkupplungsgetriebe gemäß dem Oberbegriff des Patentanspruches 1.

Aus der DE 199 50 679 A1 ist ein automatisiertes Doppelkupplungsgetriebe bekannt. Doppelkupplungsgetriebe weisen üblicherweise zwei koaxial angeordnete Getriebeeingangswellen auf, denen jeweils eine separate Reibkupplung und eine Gruppe von Gangstufen zugeordnet ist. Üblicherweise umfasst die eine Gruppe Gangstufen mit ungerader Ordnungszahl und die andere Gruppe Gangstufen mit gerader Ordnungszahl. Ein Vorteil von Doppelkupplungsgetrieben besteht darin, dass ein Schalten ohne Zugkraftunterbrechung möglich ist. Bei einem Schaltvorgang wird zunächst der einzulegende "Zielgang" geschaltet, wobei die Kupplung des Zielgangs zunächst geöffnet ist. Anschließend wird die Kupplung des Zielganges geschlossen und gleichzeitig die des aktuell eingelegten Ganges geöffnet. Die Ansteuerung der Kupplungen erfolgt bei Doppelkupplungsgetrieben mit "nassen" Kupplungen üblicherweise elektrohydraulisch. Bei manchen Doppelkupplungsgetrieben geht die elektrohydraulische Steuerung bei einem Ausfall bzw. bei einer Störung der Elektronik in einen Grundzustand über, in dem beide Kupplungen geöffnet sind, was unabhängig von der momentanen Fahrsituation zu einer Unterbrechung des Kraftschlusses führt. Dies ist zumindest in machen Fahrsituationen unerwünscht, da das Fahrzeug dann bei einem Ausfall der Elektronik nur noch ausrollt, der Fahrer nicht vorgewarnt wird und das Fahrzeug nicht gezielt abstellen kann.

Aufgabe der Erfindung ist es, ein mit Blick auf die oben genannten Probleme verbessertes Doppelkupplungsgetriebe zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Doppelkupplungsgetriebe aus, das eine erste und eine zweite Kupplung aufweist, wobei für einen Normalbetrieb zum Schließen/Öffnen der ersten Kupplung eine erste und zum Schließen/Öffnen der zweiten Kupplung eine zweite durch eine Elektronik ansteuerbare Hydraulik vorgesehen ist. Der Erfindung liegt die Idee zu Grunde, dass der zumindest in manchen Schaltzuständen der Kupplungen die unmittelbar vor einem Ausfall der Kupplungssteuerung bzw. der Elektronik vorliegenden Schaltzustände der Kupplungen aufrecht erhalten bleiben sollen. Um dies zu erreichen, weist ein Doppelkupplungsgetriebe gemäß der Erfindung eine "Zustandshaltehydraulik" auf. Der Zustandshaltehydraulik werden über eine erste und eine zweite hydraulische Leitung Zustandssignale bzw. Drucksignale entsprechend den momentanen Schaltzuständen der ersten und der zweiten Kupplung zugeführt. Ferner sind hydraulische Steuerleitungen vorgesehen, welche von der Zustandshaltehydraulik zu der ersten und der zweiten Hydraulik führen. Bei einem Ausfall der Kupplungssteuerung bzw. der Elektronik steuert die Zustandshaltehydraulik zumindest in manchen "Ausgangsschaltzuständen" der Kupplungen über die hydraulischen Steuerleitungen die erste und die zweite Hydraulik so an, dass die unmittelbar vor dem Ausfall der Elektronik vorliegenden Schaltzustände der Kupplungen aufrechterhalten bleiben.

Gemäß Patentanspruch 2 ist vorgesehen, dass wenn eine der beiden Kupplungen geschlossen und die andere Kupplung geöffnet ist, und die Elektronik ausfällt, diese Schaltzustände durch die Zustandshaltehydraulik aufrecht erhalten werden. Der Fahrer kann also bei einem Ausfall der Steuerelektronik das Fahrzeug in einem "Notbetrieb" bewegen bzw. abstellen.

Im Falle einer schleifenden Kupplung, d.h. einer Kupplung, die weder ganz geöffnet noch ganz geschlossen ist, kann vorgesehen sein, dass die schleifende Kupplung bei einem Ausfall der Elektronik geöffnet oder geschlossen wird.

Gemäß Patentanspruch 5 ist vorgesehen, dass eine schleifende Kupplung bei einem Ausfall der Elektronik nur dann geschlossen wird, wenn an einem Versorgungseingang der Zustandshaltehydraulik ein Versorgungsdruck anliegt. Es kann vorgesehen sein, dass der am Versorgungseingang anliegende Druck bei einem Fahrzeug von der Drehzahl des Fahrzeugmotors abhängt. Beispielsweise liegt am Versorgungseingang der Zustandshaltehydraulik nur dann Versorgungsdruck an, wenn die Drehzahl des Motors oder die Drehzahl einer Hydraulikpumpe eine vorgegebene Mindestdrehzahl überschreitet oder wenn ein Hydraulikvolumenstrom des hydraulischen Systems einen vorgegebenen Wert überschreitet. Eine schleifende Kupplung wird also bei einem Ausfall der Elektronik geschlossen, wenn wenn eines der oben genannten Kriterien erfüllt ist. Wenn keines der oben genannten Kriterien erfüllt ist, kann vorgesehen sein, dass eine schleifende Kupplung geöffnet wird. Dadurch kann sichergestellt werden, dass z.B. bei stehendem Fahrzeug und einem Ausfall der Elektronik der Fahrer nicht durch eine "zuschnappende" Kupplung überrascht wird.

Nach einer Weiterbildung der Erfindung ist vorgesehen, dass die erste und die zweite Hydraulik jeweils einen ersten bzw. zweiten elektrohydraulischen Druckregler und ein erstes bzw. zweites Steuerventil aufweisen. Ein hydraulischer Steuerausgang des ersten bzw. zweiten Druckreglers ist mit einem Steuereingang des ersten bzw. zweiten Steuerventils verbunden. Die Steuerventile weisen ferner einen Anschluss auf, über den sie mit Arbeitsdruck versorgt werden und einen Steuerausgang, der mit der zugeordneten ersten bzw. zweiten Kupplung verbunden ist.

Nach einer Weiterbildung der Erfindung ist vorgesehen, dass die Steuerventile in einem Grundzustand, das heißt, in einem Zustand in dem ihre Steuereingänge drucklos sind, den Steuerausgang gegenüber dem Arbeitsdruck absperren. Wenn sich ein Steuerventil im Grundzustand befindet, dann ist die zugeordnete Kupplung geöffnet.

Wie bereits erwähnt, werden der Zustandshaltehydraulik über die erste bzw. zweite hydraulische Leitung Zustandssignale entsprechend dem momentanen Schaltzustand der ersten und der zweiten Kupplung zugeführt. Die erste bzw. zweite hydraulische Leitung kann an den Steuerausgang des ersten bzw. zweiten Steuerventils angeschlossen sein.

Alternativ dazu können die Steuerventile zusätzlich zu dem Steuerausgang, an den die zugeordnete Kupplung angeschlossen ist, jeweils einen separaten Signalausgang aufweisen, an den die zugeordnete erste bzw. zweite hydraulische Leitung angeschlossen ist. Hierbei kann vorgesehen sein, dass bei einer Ansteuerung der Steuerventile durch die zugeordneten Druckregler Arbeitsdruck zu dem Signalausgang durchgesteuert wird und zwar bereits bevor Arbeitsdruck zu dem Steuerausgang des Steuerventils und der damit verbundenen Kupplung durchgesteuert wird. Anschaulich gesprochen wird also die "Steuerkante" des Signalausgangs kurz vor der Steuerkante des Steuerausgangs des Steuerventils geöffnet, was später noch ausführlicher erläutert wird.

Gemäß Patentanspruch 11 wird die Zustandshaltehydraulik über ein durch die Elektronik ansteuerbares Magnetventil mit Arbeitsdruck versorgt. Im Normalbetrieb, das heißt wenn die Elektronik ordnungsgemäß funktioniert, ist das Magnetventil bestromt. In diesem "aktiven Zustand" sperrt das Magnetventil die Zustandshaltehydraulik gegenüber dem Arbeitsdruck ab. Bei einem Ausfall der Steuerelektronik geht das Magnetventil in seinen Grundzustand über. Im Grundzustand ist das Magnetventil geöffnet und lässt den Arbeitsdruck zur Zustandshaltehydraulik durch. Im "Notbetrieb" ist die Zustandshaltehydraulik also mit Arbeitsdruck versorgt und kann über die hydraulischen Steuerleitungen die erste und die zweite Hydraulik so ansteuern, dass der vor dem Ausfall der Elektronik vorliegende Schaltzustand der Kupplungen aufrecht erhalten bleibt.

Gemäß Patentanspruch 12 weist die Zustandshaltehydraulik Steuerkolben auf, der verschieblich in einem Gehäuse der Zustandshaltehydraulik angeordnet ist. Die Verschiebestellung des Steuerkolbens hängt von den in der ersten und zweiten hydraulischen Leitung herrschenden Druck ab. Die in der ersten und zweiten hydraulischen Leitung herrschenden Drücke entsprechen den Schaltstellung der beiden Kupplungen. Durch den über die erste hydraulische Leitung zugeführten Druck kann der Steuerkolben in eine erste Richtung verschoben werden und durch den über die zweite hydraulische Leitung zugeführten Druck kann der Steuerkolben in eine zweite Richtung verschoben werden. In einer ersten Stellung des Steuerkolbens ist die erste hydraulische Steuerleitung, die mit der ersten Hydraulik verbunden ist, gegenüber dem Magnetventil, d.h. gegenüber dem im Notbetrieb am Ausgang des Magnetventils anliegenden Arbeitsdruck abgesperrt. In einer zweiten Stellung des Steuerkolbens hingegen ist die zweite hydraulische Steuerleitung gegenüber dem Magnetventil abgesperrt.

Der Steuerkolben weist ferner eine Grundstellung auf. Es kann vorgesehen sein, dass in der Grundstellung des Steuerkolbens die Drücke in der ersten und zweiten hydraulischen Leitung einander gerade aufheben, bzw. dass die beiden Drücke Null sind. In der Grundstellung des Steuerkolbens sperrt die Zustandshaltehydraulik den vom Magnetventil kommenden Druck gegenüber beiden Steuerleitungen ab, was dazu führt, dass beide Kupplungen drucklos sind und geöffnet bleiben.

Gemäß Patentanspruch 13 ist vorgesehen, dass der Steuerkolben, wenn an der ersten und an der zweiten hydraulischen Leitung kein Druck anliegt, bzw. wenn sich die in der ersten und zweiten hydraulischen Leitung herrschenden Drücke gerade gegeneinander aufheben, durch zwei in entgegengesetzte Richtung wirkende Druckfedern in die Grundstellung gedrückt wird, in der die beiden hydraulischen Steuerleitungen durch den Steuerkolben gegenüber dem Magnetventil abgesperrt sind.

Gemäß Patentanspruch 14 ist vorgesehen, dass der Steuerkolben der Zustandshaltehydraulik so vorgespannt ist, dass er nur dann aus seiner Grundstellung in seine erste oder in seine zweite Stellung verschiebbar ist, wenn die Differenz der Drücke in der ersten und der zweiten hydraulischen Steuerleitung einen vorgegebenen "Differenzschwellwert" überschreitet.

Gemäß Patentanspruch 15 ist vorgesehen, dass zwischen dem Magnetventil und der Zustandshaltehydraulik ein Ventil angeordnet ist, das in einem Grundzustand die Fluidverbindung zwischen dem Magnetventil und der Zustandshaltehydraulik sperrt und das die Fluidverbindung zwischen dem Magnetventil und der Zustandshaltehydraulik nur dann durchschaltet, wenn der Volumenstrom durch das Magnetventil einen vorgegebenen Wert überschreitet. Der vorgegebene Wert entspricht einer bestimmten Förderleistung einer Hydraulikpumpe bzw. einer bestimmten Motordrehzahl. Das heißt, das Zustandshalteventil wird bei einem Ausfall der Elektronik nur dann mit Druck versort, wenn die Motordrehzahl einen vorgegebenen Wert überschreitet. Bei geringen Motordrehzahlen, zum Beispiel im Leerlauf, wird kein Druck zum Zustandshalteventil durchgeschaltet und folglich wird bei einem Ausfall der Elektronik bei niedrigen Motordrehzahlen auch keine der beiden Kupplungen geschlossen.

Im folgenden wird die Erfindung im Zusammenhang mit der Zeichnung näher erläutert. Es zeigen:
- Figur 1: das Grundprinzip eines Doppelkupplungsgetriebes in schematischer Darstellung;
- Figur 2: eine Schaltungsanordnung zur Steuerung der beiden Kupplung der beiden Doppelkupplungsgetriebes der Figur 1;
- Figur 3: eine Variante des Ausführungsbeispiels der Figur 2, wobei die Steuerventile einen separaten Signalausgang aufweisen; und
- Figur 4: ein Ausführungsbeispiel mit einer Leckagesteuerung.

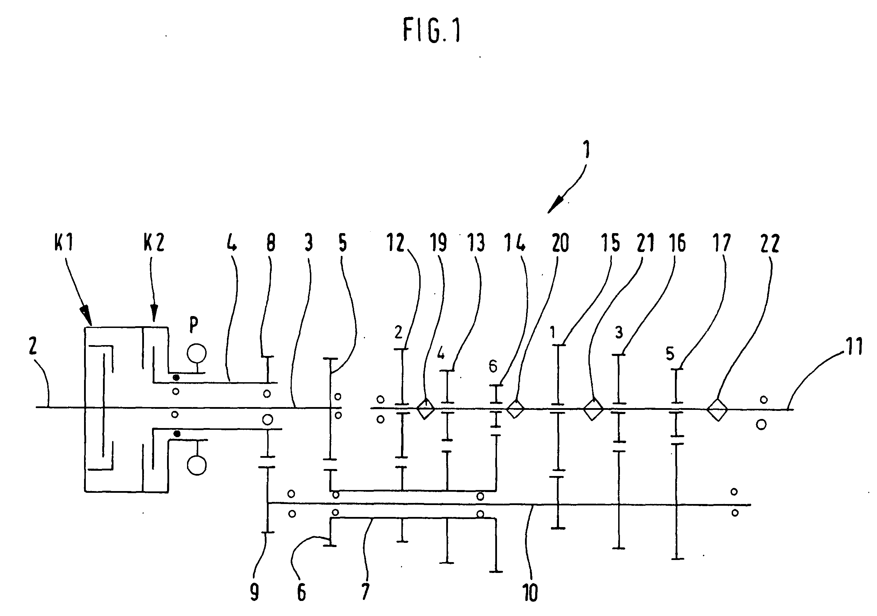

**Figur 1** zeigt ein Doppelkupplungsgetriebe 1 mit einer Antriebswelle 2, einer ersten Kupplung K1 und einer zweiten Kupplung K2. Über die erste Kupplung K1 kann die Antriebswelle 2 mit einer Welle 3 gekoppelt werden. Über die zweite Kupplung K2 kann eine koaxial zur Welle 3 angeordnete Hohlwelle 4 mit der Antriebswelle 2 gekoppelt werden.

Ein auf der Welle 3 sitzendes Zahnrad 5 kämmt mit einem Zahnrad 6 einer ersten Vorgelegewelle 7, die als Hohlwelle ausgebildet ist. Ein Zahnrad 8 der Hohlwelle 4 kämmt mit einem Zahnrad 9 einer zweiten Vorgelegewelle 10.

Ferner ist eine Abtriebswelle 11 vorgesehen, auf der Losräder 12-18 drehbar angeordnet sind, die über Schaltmuffen 19 - 22 mit der Abtriebswelle 11 koppelbar sind.

Die Losräder 15, 16, 17 bilden die "ungeraden" Gangstufen 1, 3, 5. Die Losräder 12, 13, 14 bilden die "geraden" Gangstufen 2, 4, 6. Wenn beispielsweise der erste Gang eingelegt ist und in den zweiten Gang geschaltet werden soll, ist die Kupplung K2 geschlossen und die Kupplung K1 geöffnet. Bei geöffneter Kupplung K1 kann der zweite Gang gleichzeitig zum ersten Gang eingelegt werden. Anschließend wird die Kupplung K1 geschlossen und die Kupplung K2 gleichzeitig geöffnet, was ein Schalten ohne Zugkraftunterbrechung ermöglicht.

Beim Schalten in den nächsthöheren oder nächstniedrigeren Gang werden also die beiden Kupplungen K1 und K2 gleichzeitig betätigt, wobei stets eine der beiden Kupplungen geöffnet und die andere geschlossen wird. Die Betätigung der Kupplungen K1 und K2 erfolgt durch eine elektrohydraulische Steuerung, was im Zusammenhang mit den nachfolgenden Figuren näher erläutert wird.

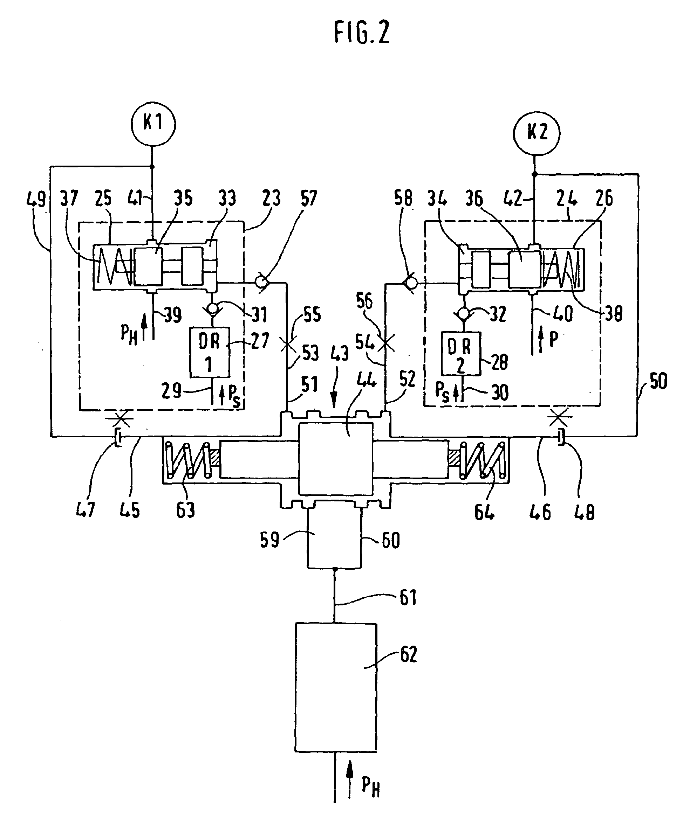

**Figur 2** zeigt eine elektrohydraulische Steuerung zur Ansteuerung der beiden Kupplungen K1 und K2. Im Normalbetrieb wird die Kupplung K1 durch eine erste Steuerhydraulik 23 und die Kupplung K2 durch eine zweite Steuerhydraulik 24 angesteuert. Die erste und die zweite Steuerhydraulik 23 bzw. 24 sind hier identisch aufgebaut und weisen jeweils ein Steuerventil 25 bzw. 26 und einen Druckregler 27 bzw. 28 auf. Die Druckregler 27, 28 werden über einen Eingang 29, 30 mit einem Steuerdruck Pₛ versorgt. Die Druckregler 27, 28 sind jeweils über ein Rückschlagventil 31, 32 mit einem Steuereingang 33, 34 des zugeordneten Steuerventils 25, 26 verbunden.

Die Steuerventile 25, 26 weisen jeweils ein Gehäuse mit einem darin verschieblich angeordneten Doppelkolben 35, 36 auf, der durch eine Feder 37, 38 zum Steuereingang 33, 34 hin vorgespannt ist. Die Steuerventile 25, 26 weisen ferner einen Eingang 39 bzw. 40 für einen Hauptdruck auf und einen Steuerausgang 41, 42, der mit der Kupplung K1 bzw. K2 verbunden ist.

Im Normalbetrieb werden die Druckregler 27, 28 elektrisch angesteuert. In Abhängigkeit des Stroms, der durch die Druckregler 27, 28 fließt, wird in den Steuereingängen 33, 34 ein bestimmter Hydraulikdruck eingesteuert. Dadurch werden die Steuerkolben 35, 36 entgegen der Kraft der Feder 37 bzw. 38 verschoben.

In der hier gezeigten Grundstellung sind die Druckregler 27, 28 stromlos und es wird kein oder nur ein sehr geringer Druck in die Steuereingänge 33, 34 eingesteuert, was dazu führt, dass die Steuerkolben 35, 36 durch die Feder 37 bzw. 38 in ihre Endstellung gedrückt werden. In den Endstellungen sind der Eingang 39 gegenüber dem Steuerausgang 41 abgesperrt und der Eingang 40 ist gegenüber dem Steuerausgang 42 abgesperrt. Wenn die Druckregler 27 bzw. 28 stromlos sind, dann sind also die Kupplungen K1 und K2 geöffnet.

Wie bereits oben erwähnt, besteht ein wesentliches Ziel der Erfindung darin, bei einem Ausfall der Steuerelektronik, das heißt bei einem Ausfall der Elektronik, welche die Druckregler 27, 28 ansteuert, zumindest in manchen Schaltzuständen der Kupplungen den unmittelbar vor dem Ausfall vorliegenden Schaltzustand der Kupplungen K1 und K2 aufrecht zu erhalten. Hierzu ist ein Zustandshalteventil 43 vorgesehen. Das Zustandshalteventil 43 weist ein Gehäuse mit einem darin verschieblich angeordneten Steuerkolben 44 auf. Das Zustandshalteventil 43 weist ferner zwei Druckeingänge 45, 46 auf, die jeweils über eine Drosselstelle 47, 48 und eine erste bzw. zweite hydraulische Leitung 49, 50 mit dem Steuerausgang 41 des ersten Steuerventils 25 bzw. mit dem Steuerausgang 42 des zweiten Steuerventils 26 verbunden sind. Das Zustandshalteventil 43 weist ferner Steuerausgänge 51, 52 auf, die über hydraulische Steuerleitungen 53, 54 auf, in denen jeweils eine Drosselstelle 55, 56 und jeweils ein Rückschlagventil 57, 58 angeordnet sind. Das Zustandshalteventil 43 ist über die hydraulischen Steuerleitungen 53, 54 mit dem Steuereingang 33 des ersten Steuerventils 25 bzw. mit dem Steuereingang 34 des zweiten Steuerventils 26 verbunden.

Das Zustandshalteventil 43 weist ausserdem zwei Eingänge 59, 60 auf, die mit einem Ausgang 61 eines Magnetventils 62 verbunden sind, wobei das Magnetventil 62 mit einem Hauptdruck P_{H} versorgt wird. Im Normalbetrieb ist das Magnetventil 62 bestromt und sperrt den Ausgang 61 gegenüber dem Hauptdruck P_{H} ab. Bei einem Ausfall der Stromversorgung bzw. der Steuerelektronik geht das Magnetventil 62 in seinen Grundzustand über und schaltet den Hauptdruck zum Ausgang 61 bzw. zu den Eingängen 59, 60 des Zustandshalteventils 43 durch.

Wie aus Figur 2 ersichtlich ist, sind die beiden gegenüberliegenden Enden des Steuerkolbens 44 des Zustandshalteventils 43 jeweils durch eine Druckfeder vorgespannt. Wenn in den hydraulischen Leitungen 49, 50 kein Druck herrscht, bzw. wenn sich die Drücke gegeneinander aufheben, dann drücken die Druckfedern 63, 64 den Steuerkolben 44 in die hier gezeigte Grundstellung. In der Grundstellung sperrt der Steuerkolben 44 die Eingänge 59, 60 gegenüber den Steuerausgängen 51, 52 ab.

Geht man von einem Zustand aus, in dem beispielsweise die Kupplung K1 geschlossen und die Kupplung K2 geöffnet ist, so würde bei einem Ausfall der Steuerelektronik das Steuerventil 25 in den hier gezeigten Grundzustand zurückgehen, was zu einem Druckabfall an der Kupplung K1 und zu einem Öffnen der Kupplung K1 führen würde. Der vor dem Ausfall der Steuerelektronik an der Kupplung K1 anstehende Steuerdruck steht jedoch über die erste hydraulische Leitung 49 am Eingang 45 des Zustandshalteventils 43 an. Dieser Druck ist bei geschlossener Kupplung K1 größer als der am Eingang 46 anstehende Druck, was dazu führt, dass bei geschlossener Kupplung K1 und bei geöffneter Kupplung K2 der Steuerkolben 44 des Zustandshalteventils 43 nach rechts verschoben ist. In diesem Zustand ist der Eingang 60 gegenüber dem Ausgang 52 abgesperrt und der Eingang 59 steht in Druckverbindung mit dem Ausgang 51. Bei einem Ausfall der Steuerelektronik geht auch das Magnetventil 62 in seinen Grundzustand über, was dazu führt, dass der Hauptdruck P_{H} über den Ausgang 61, den Eingang 59 zum Ausgang 51 und weiter zum Steuereingang 33 des Steuerventils 25 durchgeschaltet wird. Der Steuerkolben 35 des Steuerventils 25 wird also auch bei einem Ausfall der Steuerelektronik in seinem ursprünglichen Zustand gehalten, das heißt, der am Eingang 39 anliegende Hauptdruck P_{H} wird zum Ausgang 41 bzw. zur Kupplung K1 durchgeschaltet, was dazu führt, dass die Kupplung K1 geschlossen bleibt. Auch die Kupplung K2 behält ihren Ausgangszustand bei. Sie bleibt geöffnet.

In analoger Weise wird der Ausgangszustand beibehalten, wenn die Kupplung K1 geöffnet und die Kupplung K2 geschlossen ist und ein Ausfall der Steuerelektronik auftritt.

Geht man von einem Ausgangszustand aus, in dem beide Kupplungen K1 und K2 geöffnet sind, das heißt, in dem die Druckregler 27, 28 stromlos sind, so befinden sich die Steuerkolben 35, 36 der Steuerventile 25, 26 in dem hier gezeigten Grundzustand. An den Eingängen 45, 46 des Zustandshalteventils 43 liegt also jeweils der Druck Null bzw. ein gleicher Druck an. Folglich befindet sich der Steuerkolben 44 in der hier gezeigten Mittelstellung, in der die Eingänge 59, 60 durch den Steuerkolben 44 abgesperrt sind. Bei einem Ausfall der Steuerelektronik schaltet zwar das Magnetventil 62 durch. Der an den Eingängen 59, 60 anliegende Druck wird aber durch den Steuerkolben 44 gegenüber den Steuereingängen 33, 34 der Steuerventile 25, 26 abgesperrt, so dass sich am "Ausgangschaltzustand" der Steuerventile 25, 26 nichts ändert.

Das Zustandshalteventil ist hier so ausgelegt, dass der Steuerkolben 44 nur dann nach links oder nach rechts verschoben wird, wenn die Druckdifferenz in der ersten und zweiten hydraulischen Leitung 49, 50 bzw. an den Eingängen 45, 46 einen vorgegebenen Differenzdruckwert überschreitet. Wenn beispielsweise die Kupplung K2 geöffnet ist und die Kupplung K1 nur leicht angelegt ist, dann herrscht in der ersten hydraulischen Leitung 49 ein geringerer Druck als wenn die Kupplung K1 voll geschlossen ist. Das Zustandshalteventil 43 ist nun so ausgelegt, dass bei nur angelegter Kupplung der Kupplungsdruck, das heißt der in der ersten hydraulischen Leitung 49 herrschende Druck, nicht ausreicht, den Steuerkolben 44 zu verschieben. Das heißt, wenn die Kupplung K2 geöffnet ist und die Kupplung K1 nur leicht schleift und die Steuerelektronik anschließend ausfällt, dann wird die Kupplung K1 nicht vollständig geschlossen, sondern geöffnet, da der Steuerkolben 44 in seiner Mittelstellung bleibt und die Eingänge 59, 60 gegenüber den Steuereingängen 33, 34 der Steuerventile 25, 26 abgesperrt bleiben. Bei dem in Fig. 2 gezeigten Ausführungsbeispiel wir also der Kolben 44 nur dann nach links oder nach rechts verschoben, wenn in einer der beiden Steuerleitungen 49, 50 der normale Arbeitsdruck herrscht und eine der beiden Kupplungen K1 oder K2 geschlossen ist.

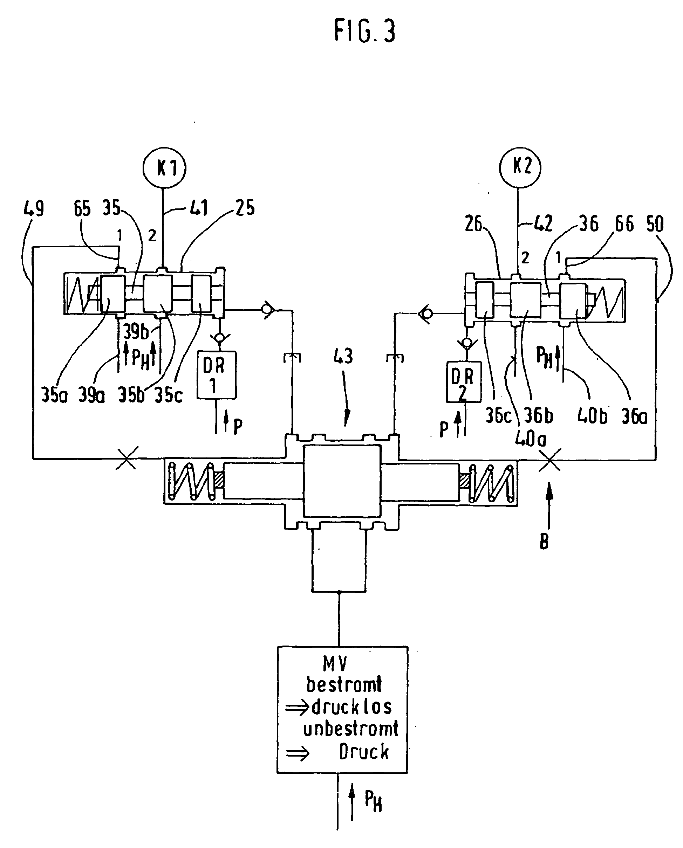

**Figur 3** zeigt eine Variante des Ausführungsbeispiels der **Figur 2**. Die Steuerkolben 35, 36 der Steuerventile 25, 26 weisen hier drei Kolbenabschnitte 35a, 35b, 35c bzw. 36a, 36b, 36c auf. Ferner sind jeweils zwei Eingänge für Hauptdruck 39a, 39b bzw. 40a, 40b vorgesehen. Zusätzlich zu dem Steuerausgang 41 bzw. 42 weisen die Steuerventile 25, 26 einen separaten Signalausgang 65 bzw. 66 auf. An den Signalausgang 65 ist die erste hydraulische Leitung 49 angeschlossen und an den Signalausgang 66 ist die zweite hydraulische Leitung 50 angeschlossen.

Wesentlich bei diesem Ausführungsbeispiel ist, dass die Steuerkante des Kolbenabschnitts 35a kurz vor der Steuerkante des Kolbenabschnitts 35b öffnet. Dementsprechend öffnet die Steuerkante des Kolbenabschnitts 36a kurz vor der Steuerkante des Kolbenabschnitts 36b. Im Unterschied zum Ausführungsbeispiel der Figur 2 wird also bereits bei schleifender Kupplung, das heißt bei geringem Kupplungsdruck der Arbeitsdruck P_{H} über die etwas früher öffnende Steuerkante der Kolbenabschnitte 35a bzw. 35b über die erste bzw. zweite hydraulische Leitung 49 bzw. 50 zum Zustandshalteventil 43 durchgesteuert. Bei einem Ausfall der Steuerelektronik wird also eine schleifende Kupplung geschlossen und nicht, wie bei Figur 2, geöffnet.

Im übrigen entspricht die Funktionsweise des Ausführungsbeispiels der **Figur 3** der des Ausführungsbeispiel der **Figur 2**.

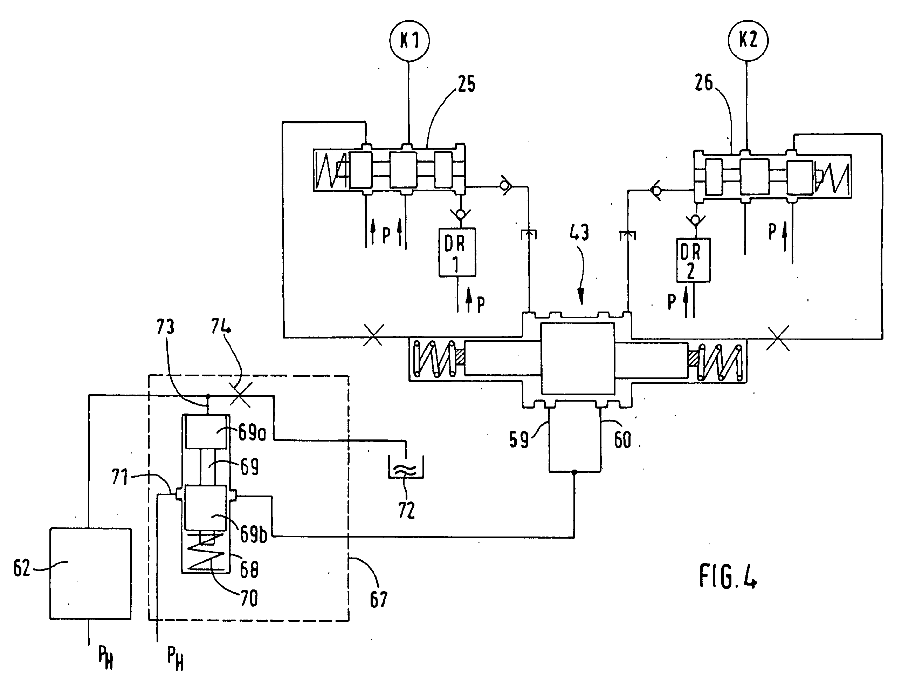

**Figur 4** zeigt eine Variante des Ausführungsbeispiels der Figur 3, bei dem zusätzlich eine "Leckagesteuerung" 67 vorgesehen ist. Es wird ausdrücklich darauf hingewiesen, dass eine solche Leckagesteuerung selbstverständlich auch bei dem in **Figur 2** beschriebenen Ausführungsbeispiel vorgesehen sein kann.

Die Leckagesteuerung 67 weist ein Ventil 68 mit einem Kolben 69 auf. Der Kolben 69 ist ein Doppelkolben und weist zwei Kolbenabschnitte 69a, 69b auf. Der Kolben 69 ist durch eine Druckfeder 70 in die hier gezeigte obere Stellung vorgespannt, was dem Grundzustand des Ventils entspricht. Im Grundzustand des Ventils 68 wird ein Ventileingang 71, an dem der Hauptdruck P_{H} anliegt, durch den Kolbenabschnitt 69b gegenüber den Eingängen 59, 60 des Zustandshalteventils 43 abgesperrt. Im Normalbetrieb, das heißt, wenn die Steuerelektronik ordnungsgemäß funktioniert, ist das Magnetventil 62 bestromt. Im bestromten Zustand sperrt das Magnetventil 62 den Hauptdruck P_{H} gegenüber einem Ölsumpf 72 und einem Steuereingang 73 des Ventils 68 ab. Bei einem Ausfall der Steuerelektronik geht das Magnetventil 62 in seinen Grundzustand über, in dem es geöffnet ist. Dies führt dazu, dass ein Volumenstrom durch das Magnetventil 62 strömt. Der Volumenstrom strömt über eine Drosselstelle 74 zum Ölsumpf 72. Ferner entsteht am Steuereingang 73 ein Öldruck, der den Kolben 69 entgegen der Kraft der Druckfeder 70 verschiebt, was dazu führt, dass der am Eingang 71 anliegende Hauptdruck P_{H} zu den Eingängen 59, 60 des Zustandshalteventils 43 durchgeschaltet wird.

Im folgenden wird die Funktion der Leckagesteuerung 67 näher erläutert. Wenn die Steuerelektronik ausgefallen ist, wird bei einer niedrigen Motordrehzahl von zum Beispiel 500-1500 min⁻¹ der durch das Magnetventil 62 strömende Volumenstrom nicht ausreichen, um einen hinreichend hohen, für die Verschiebung des Kolbens 69 erforderlichen Druck am Eingang 73 zu erzeugen. Nur bei höheren Motordrehzahlen bzw. nur bei höheren Drehzahlen der Hydraulikpumpe (nicht dargestellt) wird am Eingang 73 ein für die Verschiebung des Kolbens 69 hinreichend hoher Druck entstehen. Bei stehendem Fahrzeug, bzw. wenn der Motor mit Leerlaufdrehzahl läuft, wird der Arbeitsdruck P_{H} also nicht zu den Eingängen 59, 60 durchgeschaltet. Folglich werden bzw. sind bei stehendem bzw. langsam laufendem Motor die Kupplungen K1 und K2 geöffnet.

## Patentansprüche

1. Doppelkupplungsgetriebe, das eine erste und eine zweite Kupplung (K1, K2) aufweist, wobei für einen Normalbetrieb zum Schließen/Öffnen der ersten Kupplung (K1) eine erste und zum Schließen/Öffnen der zweiten Kupplung (K2) eine zweite durch eine Elektronik ansteuerbare Hydraulik (23, 24) vorgesehen ist,
**dadurch gekennzeichnet, dass**
eine Zustandshaltehydraulik (43) vorgesehen ist, der über eine erste und eine zweite hydraulische Leitung (49, 50) Zustandssignale entsprechend dem momentanen Schaltzustand der ersten und der zweiten Kupplung (K1, K2) zugeführt werden und die über hydraulische Steuerleitungen (53, 54) mit der ersten und der zweiten Hydraulik (23, 24) verbunden ist, wobei bei einem Ausfall der Elektronik die Zustandshaltehydraulik (43) in mindestens einem Schaltzustand der Kupplungen (K1, K2) die erste und die zweite Hydraulik (23, 24) hydraulisch so ansteuert, dass die unmittelbar vor dem Ausfall der Elektronik vorliegenden Schaltzustände der Kupplungen (K1, K2) aufrechterhalten bleiben.

2. Doppelkupplungsgetriebe nach Anspruch 1, wobei die Zustandshaltehydraulik (43) bei einem Ausfall der Elektronik eine vor dem Ausfall offene Kupplung offen hält und eine vor dem Ausfall geschlossene Kupplung geschlossen hält.

3. Doppelkupplungsgetriebe nach Anspruch 1 oder 2, wobei die Zustandshaltehydraulik (43) bei einem Ausfall der Elektronik eine vor dem Ausfall schleifende Kupplung öffnet.

4. Doppelkupplungsgetriebe nach Anspruch 1 oder 2, wobei die Zustandshaltehydraulik (43) bei einem Ausfall der Elektronik eine vor dem Ausfall schleifende Kupplung schließt.

5. Doppelkupplungsgetriebe nach einem der Ansprüche 1 bis 4, wobei bei einem Ausfall der Elektronik eine vor dem Ausfall schleifende Kupplung (K1, K2) nur dann geschlossen wird, wenn an einem Versorgungseingang (59, 60) der Zustandshaltehydraulik (43) ein Versorgungsdruck anliegt.

6. Doppelkupplungsgetriebe nach Anspruch 5, wobei das Doppelkupplungsgetriebe ein Getriebe eines von einem Motor angetriebenen Fahrzeugs ist und der Versorgungseingang (59, 60) der Zustandshaltehydraulik (43) bei einem Ausfall der Elektronik nur dann mit Versorgungsdruck versorgt wird, wenn die Drehzahl des Motors eine vorgegebene Drehzahl überschreitet, so dass eine vor dem Ausfall schleifende Kupplung (K1, K2) nur dann geschlossen wird, wenn die Drehzahl des Motors die vorgegebene Drehzahl überschreitet und geöffnet wird, wenn die Drehzahl beim Ausfall der Elektronik kleiner als die vorgegebene Drehzahl ist.

7. Doppelkupplungsgetriebe nach einem der Ansprüche 1 bis 6, wobei die erste und die zweite Hydraulik (23, 24) jeweils einen ersten bzw. zweiten elektrohydraulischen Druckregler (27, 28) aufweisen, wobei ein hydraulischer Steuerausgang des ersten bzw. zweiten Druckreglers (27, 28) mit einem Steuereingang (33, 34) eines ersten bzw. zweiten Steuerventils (25, 26) verbunden ist, wobei die Steuerventile (25, 26) mit einem Arbeitsdruck (P_{H}) versorgt werden und jeweils einen Steuerausgang (41, 42) aufweisen, der mit der zugeordneten ersten bzw. zweiten Kupplung (K1, K2) verbunden ist.

8. Doppelkupplungsgetriebe nach Anspruch 7, wobei die Steuerventile (25, 26) in einem Grundzustand, in dem ihre Steuereingänge (33, 34) drucklos sind, den Arbeitsdruck (P_{H}) gegenüber ihrem Steuerausgang (41, 42) absperren, so dass im Grundzustand der Steuerventile (25, 26) die jeweils zugeordnete Kupplung (K1, K2) geöffnet ist.

9. Doppelkupplungsgetriebe nach Anspruch 7 oder 8, wobei die erste bzw. zweite hydraulische Leitung (49, 50) an den Steuerausgang (41, 42) des ersten bzw. zweiten Steuerventils (25, 26) angeschlossen ist.

10. Doppelkupplungsgetriebe nach einem der Ansprüche 7 oder 8, wobei die Steuerventile (25, 26) zusätzlich zu dem Steuerausgang (41, 42), an den die zugeordnete Kupplung (K1, K2) angeschlossen ist, jeweils einen separaten Signalausgang (55, 56) aufweisen, an den die zugeordnete erste bzw. zweite hydraulische Leitung (49, 50) angeschlossen ist, wobei bei einer Ansteuerung der Steuerventile (25, 26) durch die zugeordneten Druckregler (27, 28) Arbeitsdruck zu dem Signalausgang (65, 66) durchgesteuert wird und zwar bereits kurz bevor Arbeitsdruck zu dem Steuerausgang (41, 42) und der damit verbundenen Kupplung (K1, K2) durchgesteuert wird. (Fig. 3)

11. Doppelkupplungsgetriebe nach einem der Ansprüche 1 bis 10, wobei die Zustandshaltehydraulik (43) über ein durch die Elektronik ansteuerbares Magnetventil (62) mit Arbeitsdruck (P_{H}) versorgbar ist, wobei das Magnetventil (62) im Normalbetrieb bestromt ist und die Zustandshaltehydraulik (43) gegenüber dem Arbeitsdruck (43) im Normalbetrieb absperrt ist und bei einem Ausfall der Elektronik das Magnetventil (62) öffnet und Arbeitsdruck zur Zustandshaltehydraulik (43) durchlässt.

12. Doppelkupplungsgetriebe nach Anspruch 11, wobei die Zustandshaltehydraulik (43) einen Steuerkolben (44) aufweist, der durch den über die erste hydraulische Leitung (49) zugeführten Druck in eine erste Richtung und durch den über die zweite hydraulische Leitung (50) zugeführten Druck in eine zweite Richtung verschiebbar ist und der in einer ersten Stellung die erste hydraulische Steuerleitung (53) und in einer zweiten Stellung die zweite hydraulische Steuerleitung (54) gegenüber dem Magnetventil absperrt und in einer Grundstellung den vom Magnetventil (62) kommenden Druck gegenüber beiden hydraulischen Steuerleitungen (53, 54) absperrt.

13. Doppelkupplungsgetriebe nach Anspruch 12, wobei der Steuerkolben (44), wenn an der ersten und an der zweiten hydraulischen Leitung (49, 50) kein oder jeweils der gleiche Druck anliegt, durch zwei in entgegengesetzte Richtungen wirkende Druckfedern (63, 64) in die Grundstellung gedrückt wird.

14. Doppelkupplungsgetriebe nach Anspruch 13, wobei der Steuerkolben (44) so vorgespannt ist, dass er nur dann aus seiner Grundstellung in seine erste oder in seine zweite Stellung verschiebbar ist, wenn die Differenz der Drücke in der ersten und zweiten hydraulischen Leitung (49, 50) einen vorgegebenen Wert überschreitet.

15. Doppelkupplungsgetriebe nach einem der Ansprüche 11 bis 14, wobei zwischen dem Magnetventil (62) und der Zustandshaltehydraulik (43) ein Ventil (68) angeordnet ist, das in einem Grundzustand die Fluidverbindung zwischen dem Arbeitsdruck (P_{H}) und der Zustandshaltehydraulik (43) sperrt und das die Fluidverbindung zwischen dem Arbeitsdruck und der Zustandshaltehydraulik nur dann durchschaltet, wenn bei einem Ausfall der Elektronik ein durch das Magnetventil (62) fließender Volumenstrom einen vorgegebenen Wert überschreitet, wobei der vorgegebene Wert einer Förderleistung einer Hydraulikpumpe bzw. einer Motordrehzahl entspricht (Fig. 4)

16. Doppelkupplungsgetriebe nach einem der Ansprüche 1 bis 15, wobei in der ersten und in der zweiten hydraulischen Leitung (49, 50) jeweils eine Drosselstelle (47,48) vorgesehen ist.

## Claims

1. A double clutch gear unit comprising a first and a second clutch (K1, K2), wherein during normal operation for closing and opening the first clutch (K1), a first, and for closing and opening the second clutch (K2), a second electronically activated hydraulic unit (23, 24) is provided,
**characterised in that**
a state-retaining hydraulic unit (43) is provided and is supplied by a first and a second hydraulic line (49, 50) with signals of state corresponding to the instantaneous switching state of the first and the second clutch (K1, K2) and is connected by hydraulic control lines (53, 54) to the first and the second hydraulic unit (23, 24), wherein if the electronic unit fails, the state-retaining hydraulic unit (43) so actuates the first and the second hydraulic unit (23, 24), in at least one switching state of the clutches (K1, K2), that the clutches (K1, K2) remain in the state into which they were switched immediately before the failure of the electronic unit.

2. A double clutch gear unit according to claim 1, wherein if the electronic unit fails, the state-retaining hydraulic unit (43) keeps open the clutch which was open before the failure and keeps the clutch closed which was closed before the failure.

3. A double clutch gear unit according to claim 1 or 2, wherein if the electronic unit fails, the state-retaining hydraulic unit (43) opens a clutch which was slipping before the failure.

4. A double clutch gear unit according to claim 1 or 2, wherein if the electronic unit fails, the state-retaining hydraulic unit (43) closes a clutch which was sliding before the failure.

5. A double clutch gear unit according to any of claims 1 to 4, wherein if the electronic unit fails, a clutch (K1, K2) which was sliding before the failure is closed only if there is a supply pressure at a supply input (59, 60) of the state-retaining hydraulic unit (43).

6. A double clutch gear unit according to claim 5, wherein the double clutch gear unit is for a vehicle driven by an engine and if the electronic unit fails the supply input (59, 60) of the state-retaining hydraulic unit (43) is supplied with pressure only if the engine speed exceeds a set speed, so that a clutch (K1, K2) which was slipping before the failure is closed only if the engine speed exceeds the set speed when the failure occurs and is opened only if the speed is below the set speed when the failure occurs.

7. A double clutch gear unit according to any of claims 1 to 6, wherein the first and the second hydraulic unit (23, 24) have a first and a second electro hydraulic pressure regulator (27, 28) respectively, wherein a hydraulic control output of the first and second pressure regulator (27, 28) is connected to a respective control input (33, 34) by a first or second control valve (25, 26), wherein the control valves (25, 26) are supplied with a working pressure (P_{H}) and have respective control outputs (41, 42) connected to the associated first or second clutch (K1, K2).

8. A double clutch gear unit according to claim 7, wherein the control valves (25, 26), in a basic state in which their control inputs (33, 34) are depressurised, shut the working pressure (P_{H}) off from their control output (41, 42), so that when the control valves (25, 26) are in the basic state the associated clutch (K1, K2) is opened.

9. A double clutch gear unit according to claim 7 or 8, wherein the first and second hydraulic line (49, 50) are connected to the control output (41, 42) respectively of the first and second control valve (25, 26).

10. A double clutch gear unit according to claim 7 or 8, wherein in addition to the control output (41, 42) to which the associated clutch (K1, K2) is connected, the control valves (25, 26) each have a separate signal output (55, 56) to which the associated first or second hydraulic line (49, 50) is connected respectively, wherein when the control valves (25, 26) are actuated by the associated pressure regulator (27, 28) working pressure is transmitted to the signal output (65, 66) shortly before working pressure is transmitted to the control output (41, 42) and the clutch (K1, K2) connected thereto (Figure 3).

11. A double clutch gear unit according to any of claims 1 to 10, wherein the state-retaining hydraulic unit (43) is supplied with working pressure (P_{H}) via a solenoid valve (62) actuated by the electronic unit, wherein the solenoid valve (62) is energised during normal operation and the state-retaining hydraulic unit (43) is shut off from the working pressure (43) during normal operation whereas if the electronic unit fails the solenoid valve (62) opens and transmits working pressure to the state-retaining hydraulic unit (43).

12. A double clutch gear unit according to claim 11, wherein the state retaining hydraulic unit (43) comprises a control piston (44) which is movable in a first direction by the pressure supplied via the first hydraulic line (49) and in a second direction by the pressure supplied via the second hydraulic line (50) and in a first position shuts off the first hydraulic control line (53) and in a second position shuts off the second hydraulic control line (54) from the solenoid valve and in a basic position shuts off the pressure from the solenoid valve (62) from both hydraulic control lines (53, 54).

13. A double clutch gear unit according to claim 12, wherein the control piston (44) is pressed into the basic position by two pressure springs (63, 64) operating in opposite directions when the pressure applied to the first and to the second hydraulic line (49, 50) is zero or the same in each case.

14. A double clutch gear unit according to claim 13, wherein the control piston (44) is so prestressed that it is movable from its basic position into its first or its second position only when the pressure difference between the first and the second hydraulic line (49, 50) exceeds a set value.

15. A double clutch gear unit according to any of claims 11 to 14, wherein a valve (68) is disposed between the solenoid valve (62) and the state-retaining hydraulic unit (43) and in a basic state blocks the fluid connection between the working pressure (P_{H}) and the state-retaining hydraulic unit (43) and opens the fluid connection between the working pressure and the state-retaining hydraulic unit only when after a failure of the electronic unit the flow rate through the solenoid valve (62) exceeds a set value, wherein the set value corresponds to a delivery capacity of a hydraulic pump or to an engine speed (Figure 4).

16. A double clutch gear unit according to any of claims 1 to 15, wherein a restrictor (47, 48) is provided in the first and the second hydraulic line (49, 50) respectively.

## Revendications

1. Transmission à double embrayage avec un premier et un deuxième embrayage (K1, K2), dans laquelle, pour un fonctionnement normal, un premier système hydraulique (23) activé par un système électronique est prévu pour fermer/ouvrir le premier embrayage (K1) et un deuxième (24) pour fermer/ouvrir le deuxième embrayage (K2),
**caractérisé en ce qu'**
il est prévu un système hydraulique de maintien d'état (43) vers lequel sont acheminés des signaux d'état correspondant à l'état d'accouplement momentané des premier et deuxième embrayages (K1, K2), par l'intermédiaire d'une première et d'une deuxième conduite hydraulique (49, 50) est relié aux premier et deuxième systèmes hydrauliques (23, 24) par l'intermédiaire de conduites de commande hydrauliques (53, 54), et cas de panne du système électronique, le système hydraulique de maintien d'état (43) active hydrauliquement les premier et le deuxième système hydraulique (23, 24) dans au moins un état d'accouplement des embrayages (K1, K2) de telle sorte que les états d'accouplement des embrayages (K1, K2) présents directement avant la panne du système électronique restent maintenus.

2. Transmission à double embrayage selon la revendication 1,
**caractérisé en ce que**
en cas de panne du système électronique, le système hydraulique de maintien d'état (43) maintient ouvert un embrayage qui était ouvert avant la panne et maintient fermé un embrayage qui était fermé avant la panne.

3. Transmission à double embrayage selon la revendication 1 ou 2,
**caractérisé en ce que**
en cas de panne du système électronique, le système hydraulique de maintien d'état (43) ouvre un embrayage qui était en boucle avant la panne.

4. Transmission à double embrayage selon la revendication 1 ou 2,
**caractérisé en ce que**
en cas de panne du système électronique, le système hydraulique de maintien d'état (43) ferme un embrayage qui était en boucle avant la panne.

5. Transmission à double embrayage selon l'une des revendications 1 à 4,
**caractérisé en ce que**
en cas de panne du système électronique, un embrayage (K1, K2) qui était en boucle avant la panne n'est fermé que si une pression d'alimentation est appliquée à une entrée d'alimentation (59, 60) du système hydraulique de maintien d'état (43).

6. Transmission à double embrayage selon la revendication 5,
**caractérisé en ce que**
la transmission à double embrayage est celle d'un véhicule entraîné par un moteur et, en cas de panne du système électronique, l'entrée d'alimentation (59, 60) du système hydraulique de maintien d'état (43) n'est alimentée par une pression d'alimentation que si la vitesse de rotation du moteur dépasse une vitesse prédéterminée de telle sorte qu'un embrayage (K1, K2) qui était en boucle avant la panne n'est fermé que si la vitesse de rotation du moteur dépasse la vitesse prédéterminée et n'est ouvert que si, en cas de panne du système électronique, la vitesse de rotation est inférieure à la vitesse prédéterminée.

7. Transmission à double embrayage selon l'une des revendications 1 à 6,
**caractérisé en ce que**
les premier et deuxième systèmes hydrauliques (23, 24) présentent à chaque fois un premier ou deuxième régulateur de pression électrohydraulique (27, 28), une sortie de commande hydraulique du premier ou deuxième régulateur de pression (27, 28) étant reliée à une entrée de commande (33, 34) d'une première ou deuxième soupape de commande (25, 26), les soupapes de commande (25, 26) étant alimentées par une pression de travail (P_{H}) et présentent chaque fois une sortie de commande (41, 42) reliée au premier ou deuxième embrayage (K1, K2) associé.

8. Transmission à double embrayage selon la revendication 7,
**caractérisé en ce que**
les soupapes de commande (25, 26) bloquent la pression de travail (P_{H}) par rapport à leur sortie de commande (41, 42) dans un état de base, dans lequel leurs entrées de commande (33, 34) sont sans pression, de telle sorte que, dans l'état de base des soupapes de commande (25, 26), l'embrayage associé à chaque fois (K1, K2) est ouvert.

9. Transmission à double embrayage selon la revendication 7 ou 8,
**caractérisé en ce que**
la première ou deuxième conduite hydraulique (49, 50) est raccordée à la sortie de commande (41, 42) de la première ou deuxième soupape de commande (25, 26).

10. Transmission à double embrayage selon l'une des revendications 7 ou 8,
**caractérisé en ce que**
en plus de la sortie de commande (41, 42) à laquelle est raccordé l'embrayage associé (K1, K2), les soupapes de commande (25, 26) présentent chaque fois une sortie de signaux séparée (55, 56) à laquelle est raccordée la première ou deuxième conduite hydraulique associée (49, 50), sachant qu'en cas d'activation des soupapes de commande (25, 26) par le régulateur de pression associé (27, 28), la pression de travail est transférée vers la sortie de signaux (65, 66), juste avant que la pression de travail soit transférée vers la sortie de commande (41, 42) et l'embrayage (K1, K2) relié à celle-ci. (figure 3)

11. Transmission à double embrayage selon l'une des revendications 1 à 10,
**caractérisé en ce que**
le système hydraulique de maintien d'état (43) est alimenté par une pression de travail (P_{H}) par l'intermédiaire d'une électrovanne (62) activée par le système électronique, l'électrovanne (62) étant alimentée dans le fonctionnement normal et le système hydraulique de maintien d'état (43) étant bloqué dans le fonctionnement normal par rapport à la pression de travail (43), et en cas de panne du système électronique, l'électrovanne (62) s'ouvre et laisse passer la pression de travail vers le système hydraulique de maintien d'état (43).

12. Transmission à double embrayage selon la revendication 11,
**caractérisé en ce que**
le système hydraulique de maintien d'état (43) présente un piston de commande (44) déplacé dans une première direction par la pression acheminée par l'intermédiaire de la première conduite hydraulique (49) et dans une deuxième direction par la pression acheminée par l'intermédiaire de la deuxième conduite hydraulique (50) et il bloque la première conduite de commande hydraulique (53) dans une première position et la deuxième conduite de commande hydraulique (54) dans une deuxième position par rapport à l'électrovanne et bloque, dans une position de base, la pression provenant de l'électrovanne (62) par rapport aux deux conduites de commande hydrauliques (53, 54).

13. Transmission à double embrayage selon la revendication 12,
**caractérisé en ce que**
lorsque aucune pression n'est appliquée à la première et à la deuxième conduite hydraulique (49, 50) ou qu'à chaque fois la même pression est appliquée, le piston de commande (44) est poussé dans la position de base par deux ressorts de compression (63, 64) agissant dans des directions opposées.

14. Transmission à double embrayage selon la revendication 13,
**caractérisé en ce que**
le piston de commande (44) est précontraint de telle sorte qu'il ne peut être déplacé de sa position de base dans sa première ou dans sa deuxième position que lorsque la différence des pressions régnant dans les première et deuxième conduites hydrauliques (49, 50) dépasse une valeur prédéterminée.

15. Transmission à double embrayage selon l'une des revendications 11 à 14,
**caractérisé en ce qu'**
entre l'électrovanne (62) et le système hydraulique de maintien d'état (43) est disposée une soupape (68) qui bloque, dans un état de base, la liaison de fluide entre la pression de travail (P_{H}) et le système hydraulique de maintien d'état (43) et ne transmet la liaison de fluide entre la pression de travail et le système hydraulique de maintien d'état que lorsqu'en cas de panne du système électronique, un débit volumique s'écoulant par l'électrovanne (62) dépasse une valeur prédéterminée, sachant que la valeur prédéterminée correspond à une capacité de transport d'une pompe hydraulique ou à un régime de moteur. (figure 4)

16. Transmission à double embrayage selon l'une des revendications 1 à 15,
**caractérisé en ce qu'**
un point d'étranglement (47, 48) est prévu chaque fois dans la première et dans la deuxième conduite hydraulique (49, 50).
